# EUROPEAN PATENT APPLICATION

(11) **EP 2 339 562 A1**
(43) Date of publication of application: **29.06.2011**
(21) Application number: 09820240.1
(22) Date of filing: 10.10.2009
(51) Int. Cl.: G08G 1/04, G08G 1/16, G08G 1/00, B60W 30/00

(54) **WIRELESS TRAFFIC INFORMATION INDICATING METHOD AND SYSTEM**

(30) Priority: 13.10.2008 CN 200810216836; 13.10.2008 CN 200810216835; 13.10.2008 CN 200810216834
(71) Applicant: Xu, Fei, Hong Kong (CN); Huang, Geng, Hong Kong (CN)
(72) Inventor: Xu, Fei, Hong Kong (CN); Huang, Geng, Hong Kong (CN)
(74) Representative: Hocking, Adrian Niall
(86) International application number: PCT/CN2009/074388
(87) International publication number: WO 2010/043164

(57) **Abstract**

A traffic information indicating method, in which: a first vehicle or a front object synchronously transmits two wireless signals directionally. The first wireless signal is for time synchronism and the second wireless signal is for distance measurement. The first and second wireless signals are received directionally by the second vehicle. The distance between the two vehicles or between the front object and the second vehicle is calculated according to the first wireless signal and the second wireless signal. A traffic information indicating system implements the above method.

## Description

### FIELD OF PATENT APPLICATION

The present invention relates to a traffic system, and relates particularly to a system and method for indicting wireless traffic information.

### BACKGROUND

Traditional traffic information indicting system and device are mainly traffic signal lights ("traffic lights" in short) and traffic indicating signs ("road signs" in short), which provide information including traffic indicating information, road indicating information, destination information, road condition ahead information, weather prompting information, or other traffic management information.

The world's first traffic indication having the red, amber and green lights was formally born in New York, U.S.A. in 1918. It has a ninety year history since nowadays. The appearance of the three-color traffic indicating lights brought revolutionary changes to city traffic. Its control system also develops from electric control from the 50s to nowadays' electronic and computer intelligent control. It brings city traffic towards maturity.

However, the existing traffic indicating system, including theses red, amber and green lights and the regular road signs, all along has a disadvantage which remains unsolved, i.e. all indications rely on the sense of sight. The effect is obviously unsatisfactory especially under bad weather conditions (e.g. heavy rain or dense fog), or for drivers who are suffering from color blindness or color-deficiency. Also on highway, relying on the sense of sight can create problem especially in dense fog weather condition when multi-vehicle collision often occurs. As far as car accident is concerned, it has in fact become the first killer of mankind. Over the past 100 years, 40 million people died in car accidents around the world. This number exceeds the number of casualty during the Second World War. Since the entry of the 21^{st} century, there are approximately 600,000 people died in car accidents each year around the world. Hence, people consider car accidents as the war on the road.

Apart from reliance of the sense of sight that is associated with traffic accidents, the reaction and the operation of a driver are also essential factors. Vehicles travel on highways very fast. When accident suddenly occurs in bad weather condition, people's reaction is usually not fast enough. This is a reason why there are multi-vehicle collisions on highways so often. Apart from keeping an appropriate speed and distance, it is also important to pay attention to the relative speed between vehicles. To achieve safe driving, a driver needs to take immediate reaction when it is discovered that the relative speed with the vehicle ahead has changed rapidly, and at the same time transmits relevant information to the vehicles behind so that all vehicles can take immediate action to effectively avoid the occurrence of tragic. According to statistics, if a driver is given half a second of advanced reaction time, it can reduce 30% of rear-ending incidents and 50% road-related incidents. Therefore, having an effective vehicle warning system is very important in driving safety.

It is necessary to have a dynamic distance detecting device to realize the warning of vehicle collision. Nowadays, the existing technology mainly involves laser and radar (microwave). The device adopting this technology can transmit laser or microwave signals when vehicles are in motion. Then, distance measuring (measure the time difference or shift of frequency of the transmitting/receiving signals) can be carried out according to the echo reflecting from the vehicle in front. When hazardous condition occurs, hazard prompting or automatic braking can be performed to avoid collision with the vehicle in front. The main disadvantage of this kind of system is that the technology is relatively complicated and that interference can easily occur. The driving condition on a road is very complicated. When the number and density of vehicles are getting higher, or when speeding, turning, or special signs or advertisements appear along the roadside, the reflected waveforms can sometimes be difficult to predict. This would lead to false alarm or wrong operation. Also, since this kind of system cannot detect the existing traffic signal system and cannot carry out information exchange with other vehicles, it has no way to prevent vehicles from running the red light or prevent collision with other vehicles. Furthermore, laser and radar can generate electrical pollution to the environment. The reason is that when similar devices are installed in a number of vehicles in the same environment, it is difficult to avoid interference among one another. Finally, this kind of technology is relatively high in cost. It is difficult to apply this to all vehicles in a popular manner.

### SUMMARY

The technical problem needed to be solved by the present invention is to provide wireless traffic information indicating method and system in light of the deficiency in the above-mentioned existing technology. This wireless traffic information indicating method and system are wireless, dynamic, real time and all-weather operable. It does not rely on the sense of sight of a human being. It does not even rely on the reaction of a human being. It can automatically carry out emergency state operation in order to eliminate possible occurrence of a hazardous situation. Also, it can timely transmit related hazard information to vehicles behind so as to avoid occurrence of multi-vehicle collision incidents.

To solve the above-mentioned technical problem, the present invention provides a wireless traffic information indicating method including the following steps:
a first vehicle or a front object synchronously and directionally transmits a first wireless signal for time synchronization and a second wireless signal for distance measurement; and
a second vehicle directionally receives the first wireless signal and the second wireless signal, and calculates the distance between the second vehicle and the first vehicle or the front object based on the first wireless signal and the second wireless signal.

The present invention also provides a wireless traffic information indicating system including:
wireless transmitting device installed in a traffic signal light or a traffic road sign or a vehicle traveling in front for directionally transmitting digital coded first wireless signal and second wireless signal having different speeds of transmission;
wireless receiving device installed in a traveling vehicle for directionally receiving the first wireless signal and the second wireless signal, interpreting coded information in the received first wireless signal and second wireless signal, and
calculating the distance between the traveling vehicle and the traffic light or the traffic road sign or the vehicle traveling in front based on phase time difference of the received first wireless signal and second wireless signal.

The present invention may have the following advantageous effects: (1) it is a system that does not rely on weather condition and sense of sight (2) it can operate in all-weather condition; (3) it can display information on traffic light signal and provide information on the countdown of change of traffic light signal; (4) it has the function of preventing red-light-running; (5) it can display the distance from and the relative speed of the vehicle in front; (6) it can automatically control the traveling condition of a vehicle in case of emergency; (7) it can transmit related information such as traffic light signal and hazard signal to the vehicles behind; (8) it can display/prompt other road traffic information; (9) it is an environmental-friendly, electronic pollution free signal system; and (10) it is low in cost and easy for popularized application.

In summary, the implementation of the present invention can effectively increase the performance of the road traffic and can have a better protection of drivers' safety.

### BRIEF DESCRIPTION OF THE DRAWINGS

Specific embodiments of the invention will now be described by way of example with reference to the accompanying drawings wherein:
FIG. 1 is an illustrative diagram of an electronic wireless traffic light and signal transmission of vehicles on the road in an embodiment of the present invention.
FIG. 2 is an illustrative diagram of the transmission of wireless signal between two traveling vehicles in an embodiment of the present invention.
FIG. 3 is an illustrative diagram of the transmission of wireless signal during vehicle lane-change/overtake in an embodiment of the present invention.
FIG. 4 shows the waveform of wireless digital coded signal used in the system shown in FIGS. 1, 2 and 3 in an embodiment of the present invention.
FIG. 5 is an illustrative diagram of the indication/prompting of traffic/vehicle information in an embodiment of the present invention.
FIG. 6 is an illustrative diagram of traffic road sign display/indication in an embodiment of the present invention.
FIG. 7 is an illustrative diagram showing the correction of angle in an embodiment of the present invention.
FIG. 8 is an illustrative diagram showing wireless signal repeat between traveling vehicles in an embodiment of the present invention.
FIG. 9 is an illustrative diagram of wireless signal repeat between a traffic light and vehicles in an embodiment of the present invention.
FIG. 10 is a block diagram of the entire traffic information indicating system in an embodiment of the present invention.
FIG. 11 is a flowchart of the traffic information indicating method in an embodiment of the present invention.

### DETAILED DESCRIPTION

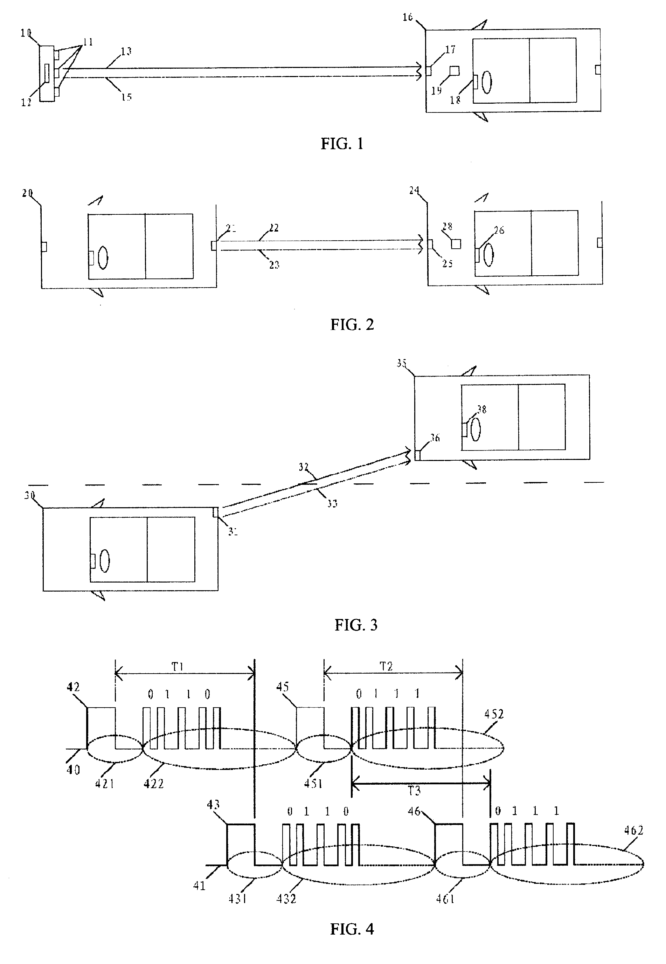

The present invention will now be described with reference to the accompanying drawings. FIG. 1 is an illustrative diagram of an electronic wireless traffic light and signal transmission of vehicles on the road according to an embodiment of the present invention. The three-color traffic light 10 may include red, green and blue lights 11 in which a wireless transmitting device 12 can be installed. The wireless transmitting device 12 may include two sets of emitters, wherein one set emits a first wireless coded signal (preferably infrared) 13 and the other set emits a second wireless coded signal (preferably ultrasound) 15. The infrared signal 13 and the ultrasound signal 15 can be transmitted simultaneously and can be received by vehicle 16 corresponding to the traffic light 10. A wireless receiving device 17 can be installed at the front of the vehicle 16. The wireless receiving device 17 can receive the infrared signal 13 and the ultrasound signal 15. At least one set of the infrared signal 13 and the ultrasound signal 15 may include digital coded information relating to the condition of the traffic signal. The wireless receiving device 17 can receive and decode the information, and restore the red, amber and green traffic light signal and then display them on a display device 18 in the vehicle. The display device 18 may further include an audio prompting device installed on a driving station or dashboard inside the vehicle to facilitate checking by a driver or provide related prompting to the driver.

The key of the present invention to achieve the all-weather dynamic traffic information reception and indication is the adoption of wireless signal having the function of all-weather directional operation in order to carry out the transmission of information. The transmission capacity of infrared (especially infrared having 8-14 mm wavelength) and ultrasound (especially ultrasound having about 20 kHz) in atmosphere is very strong. It almost won't be affected by the interference of light, dense fog, dust, rain, blowing snow and electromagnet in the air. These two kinds of signal can be more adaptable to bad weather condition than the sense of sight of a human being. They would not be affected even in night time. It is the key to the realization of all-weather operation. Also, wireless signal that can realize directional signal transmission may also include microwave and laser, etc. Therefore, the present invention does not exclude the use of microwave and laser, etc for the transmission of signal. The present invention uses infrared and ultrasound as the most preferred (preferred) signal source because these two kinds of signal source are currently the cheapest and safest signals. They would not cause harm to human body and the sight. Also, they would not cause electromagnetic wave pollution in the air. They are green environmental-friendly signal sources.

The reason for transmitting the two sets of wireless signal at the same time in the present invention is that a vehicle can calculate the distance and the speed between the vehicle and the traffic light based on the two sets of wireless signal so as to draw the attention of the driver when necessary. The speeds of transmission of these two kinds of wireless signal in the air are different. Infrared signal transmits in light speed (300,000 km per second). Therefore, it is not necessary to consider its delay in transmission. The rate of transmission of ultrasound signal in the air is 340 m per second (at 15°C). This speed is relatively slow as compared to the speed of infrared. Hence, the wireless receiving device 17 can determine the distance between the vehicle and the traffic light (in reality the wireless signal can modulate the distance between the vehicle and the vehicle's stop line) based on the time difference (because the wireless signal will be coded and modulated, therefore this time difference is also called phase time difference or phase difference) in receiving of these two different wireless signals. The calculation is: S = V*ΔT, where S is the distance between the receiver and the emitter, V is the transmission speed of ultrasound in air, ΔT is the phase time difference of infrared and ultrasound.

Since the present invention can calculate the real time distance between the transmitting device and the receiving device, it also has the function of measuring the speed of vehicle in motion. It can calculate the real time speed of a vehicle by continuously measuring the distance from a fixed transmitting sign (e.g. the above-mentioned signal light). This can prompt or adjust the driving condition of vehicles. To realize this function, the system may further include a red-light-running preventing device 19. The device 19 is actually a device for controlling the traveling of a vehicle. It can provide necessary prompting to a driver according to the vehicle speed and the distance from the stop line at the red light. It can also automatically apply the brake such that a vehicle can stop safely before the stop line at the red light.

FIG. 2 is an illustrative diagram of the transmission of wireless signal between two traveling vehicles according to an embodiment of the present invention. The vehicle in front is designated by reference numeral 20 and the vehicle behind is designated by reference numeral 24. In certain special conditions (e.g. emergency brake is applied or hazard signal is lit), the front vehicle 20 can backwardly and directionally transmit wireless signal by wireless transmitting device 21 that can be installed at the back of the vehicle 20. An infrared coded signal (first wireless signal) is designated by reference numeral 22 and an ultrasound coded signal (second wireless signal) is designated by reference numeral 23. The infrared coded signal 22 and the ultrasound coded signal 23 can be transmitted simultaneously and may have the same phase. The front portion of the vehicle 24 behind may be installed with a wireless receiving device 25 for simultaneously receiving and decoding the infrared coded signal 22 and the ultrasound coded signal 23, and calculating the distance and the relative speed between the two vehicles 20, 24 based on the phase time difference of the two signals 22, 23. The driving condition information of the front vehicle 20 can be obtained from the decoded information and can be displayed and indicated by information display device and audio prompting device 26 in the vehicle 24. When hazardous condition occurs, the rear vehicle 24 can also be controlled by an automatic traveling control device 28 installed in the vehicle 24. For example, the automatic traveling control device 28 may be a stop of fuel supply or an application of an emergency brake to avoid or eliminate the hazard. Hence, the automatic traveling control device 28 can be called an automatic anti-crash device.

FIG. 3 is an illustrative diagram of the transmission of wireless signal during vehicle lane-change/overtake according to an embodiment of the present invention. The vehicle in front is designated by reference numeral 30 and the vehicle behind is designated by reference numeral 35. When the front vehicle 30 is prepared to pick up its speed and enter into the lane of the vehicle 35 behind at the right lane, the vehicle 30 can send wireless signal (synchronize with its right turn light signal) backwardly to the right and directionally by a wireless transmitting device 31 that may be installed at the right side at the back of the vehicle 30. An infrared coded signal is designated by reference numeral 32 and an ultrasound coded signal is designated by reference numeral 33. The infrared coded signal 32 and the ultrasound coded signal 23 can be transmitted simultaneously and may have the same phase. The left side of the front portion of the vehicle 35 behind may be installed with a wireless receiving device 36 for simultaneously receiving and decoding the signals 32, 33, and calculating the distance and the relative speed between the two vehicles 30, 35 based on the phase time difference of the two signals 32, 33. The right turn information of the front vehicle 30 can be obtained from the decoded information and can be displayed and indicated by information display device and audio prompting device 38 in the vehicle 35.

In reality, the position and the number of transmitting and receiving devices can be determined by the construction of a vehicle as well as the angle, the sensitivity and coverage of the signal transmission/reception of the vehicle. This allows the vehicle to have transmission function at the back, the left and right sides at the back of the vehicle. In a vehicle braking condition, hazardous condition, turn left and right condition, wireless signals can be transmitted towards a correct direction. The wireless signal can include wireless coded signals of the above-mentioned conditions, have an appropriate coverage, and can be able to receive signal from the front, the left and right sides at the front of the vehicle.

FIG. 4 shows the waveform of wireless digital coded signal used in the system in FIGS. 1, 2 and 3 according to an embodiment of the present invention. The waveform of the received infrared coded signal is represented by reference numeral 40, and the waveform of the received ultrasound coded signal is represented by reference numeral 41. Although the waveform and the phase of the two signals at the transmitting end are the same, there is a time difference of waveforms of the signals at the receiving end because of the distance between the transmitting and receiving ends, and the transmission speeds of the two signals are not the same.

We also called this time difference a phase difference or a phase time difference. In the figure, T1 and T2 show the phase time differences of the two signals. T3 also shows the phase time difference of the two signals only that the measuring position is not the same. Signal can apply different coding methods. The most common one is the use of "0" and "1" digital code defined by the length of time and the level of the signal pulse. As shown in the figure, a pulse with a relative narrow space represents the digit "0", and a pulse with a relative wide space represents the digit "1". In practice, there can be other different methods of coding and ways of defining the digits. To determine whether two waveforms (date packages) are data transmitted in the same period of time, the above-mentioned waveforms may further include recognition code (ID). The ID of the front wave is 0110 and the ID of the rear wave is 0111. The system can only carry out comparison between waveforms having the same (or corresponding) ID. This can avoid the situation where waveforms are dislocated. This can realize synchronization of signals in the receiving device.

Calculation and analysis are carried out below using actual data as an example. Assume the above-mentioned waveforms come from the system in FIG. 2 where the two vehicles travel at 100 km per hour before T1. At the same time, assume T1 is 88.2 milliseconds, T2 is 86.0 milliseconds, the time interval between T1 and T2 is 0.1 second. Using the above-mentioned formula S = V*ΔT, the calculated distance between the two vehicles at T1 and T2 are 30.00 m and 29.24 m respectively (assume the temperature is 15°C, ultrasound transmission speed is 340 m/second). Hence, the distance between the two vehicles has changed 0.76 m in 0.1 second. This change in time and distance is difficult for ordinary drivers to react. However, this can easily be done by using the system of the present invention. According to the above-mentioned change in distance, one can calculate an existence of a negative 7.6 m/sec² average acceleration between the two vehicles. According to the above-mentioned acceleration, one can determine that the vehicle in front is applying a brake. Based on a speed of 100 m per hour and the negative 7.6 m average acceleration, the vehicle in front will travel forward 50.8 m and stop after 2.58 seconds. Rear-ending incident would occur if the vehicle behind does not apply the brake at the same time.

The traveling control device 28 in FIG. 2 produces an important effect in the above-mentioned critical situation. The device can react within a very short period of time (e.g. 0.1 second) and a traffic accident may be avoided. The system of the present invention can continuously detect the distance, speed and acceleration of two vehicles in order to increase its reliability and avoid error caused by random factors or interference. In the above example, the distance information included in the corresponding data packages (e.g. between 42 and 43 and between 45 and 46) can be analyzed. Based on the analysis, the acceleration of two vehicles can be calculated. Besides, detection can be carried out in any pulse position within a data package. This will be further described below with reference to FIG. 4, wherein a first data package of infrared signal is represented by reference numeral 42, and a second data package of infrared signal is represented by reference numeral 45. Each data package includes a leading waveform portion 421/451 and digital code areas 422/452. Similarly, the figure includes two ultrasound data packages 43, 46. Each data package includes a leading waveform portion 431/461 and digital code regions 432/462. T1 and T2 only compare, at the leading waveform, the phase time difference of two different wireless signals in the same data package (with the same ID). Since the time interval between data packages is relatively long (e.g. 0.1 second per data package), the present invention provides a faster sampling method. When a receiving device recognized the same data package (with the same data package ID) in two different wireless signals, measurement and calculation can be performed on any one pulse signal in this data package. This kind of condition is called synchronized detection condition. For example, T3 is measured at the rising edge of the first pulse of the digital code region. Similarly, measurement can be carried out at the rising edge or the falling edge of each of the subsequent pulses. This can substantially reduce the time interval of each sampling. This can increase the reaction speed of the system, and can analyze a number of measurement data. This can enhance the reliability of the system and eliminate the effect on the accuracy of the measuring system due to the error of individual data sampling. If the system receives an emergency brake information from the digital code wireless information from a vehicle in front, and the condition is also confirmed in real time measurement, then applying the brake of the vehicle behind is necessary. It is the most effective way to prevent collision of the two vehicles. In order to make the determination more accurate and reliable, apart from transmitting the emergency brake information, it can also transmit speed and acceleration information so that the judgment and reaction of the vehicle behind would not fail.

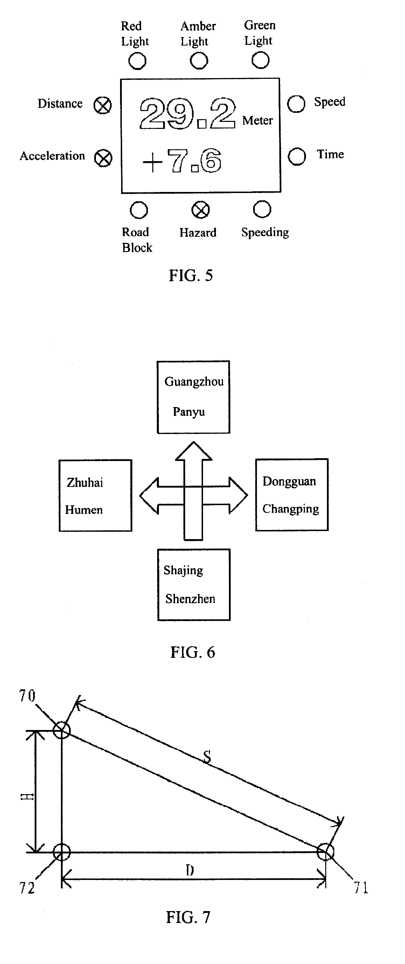

FIG. 5 is an illustrative diagram of the indication/prompting of traffic/vehicle information according to an embodiment of the present invention. In the figure, there is a digital display area which can display data of different measurements, e.g. distance, speed, acceleration, and time between two vehicles (based on current speed of vehicles), etc. The above-mentioned speed can be the relative speed of the present vehicle and the vehicle in front. It can also be the speed between a fixed speed limit sign (can be installed on the road, or buried in the road with an exposed transmitting head). Since this speed limit sign is fixed, the measured speed is the speed of the vehicle itself. Since the speed limit sign has the function of transmitting/ retransmitting speed limit information, the system of the present invention can directly display speeding information and perform speed reduction operation by the traveling control device 28 when necessary. For example, a reduction of fuel supply can be carried out to achieve steady speed reduction to a speed within the speed limit. Outside the digital display area, there may be information on red, amber and green traffic light signals, and prompting information such as road block, speeding and hazard. Hazard prompting information can be generated after different kinds of data are compared and analyzed. This information may include parameters such as information on the condition transmitted from the vehicle in front, speed of the vehicle behind, distance and relative acceleration of the two vehicles, etc. Prompting can be generated if it is found out that the collision time is less than a certain value. If the hazardous condition is worsened and irreversible result would occur if no action is taken, then the system would start the traveling control device 28 in order to carry out automatic application of the brake so that the hazardous condition can be controlled.

For vehicles that are traveling slowly or have already stopped (e.g. waiting for traffic signal at intersection) or the speed of the vehicle in front is not less than the speed of the vehicle behind, and in a forward accelerating condition (e.g. in FIG. 3 when the vehicle at the front and left side is overtaking), then it is not necessary to transmit any prompting signal and normal driving won't be interrupted. The prompting device of the system may further include audio prompting function. When hazardous condition occurs, or signal light condition changes, or new information displays, corresponding prompting can be generated. It can also generate different prompting sounds according to different situations so that a driver can get ready for different actions according to different prompting sounds. The can increase the efficiency of traffic and enhance driving safety on the road.

The system of the present invention may further include electronic road signs displaying/indicating functions. These electronic road signs displaying/indicating function can be seen in FIG. 6. As shown in the figure, there may be three traveling arrows, namely left, forward and right. Different display sections can be illuminated under different conditions in order to show the current signal condition. There may be a display zone in each of the forward, back, left and right arrow zones so as to indicate the current position of a vehicle, destination in different directions, and highway exits, etc.

Road sign and traffic light information come from the road signs and traffic lights provided on the road. They can be called wireless electronic road signs and wireless electronic traffic light devices. Compared to the traditional road sign and traffic light, the biggest advantage of the electronic road sign and traffic light system is that it is an all-weather signal system. No matter what is the weather condition, the system can properly receive and display/prompt the related information so as to make driving convenient and safe. Also, the system can display other additional information, e.g. the countdown of change of traffic light so that a driver can slow down before traffic light changes to red, and get ready before traffic light changes to green in order to increase the road traffic efficiency. Furthermore, the system can display speed limit, road block information, slowdown information, pedestrian path information, road condition ahead information, weather information and other traffic management information, etc.

It is necessary to note that sometimes it is required to make necessary compensation/correction of the distance data calculated by the system of the present invention in order to satisfy its requirement on accuracy. There are mainly two aspects with regard to compensation/correction. One aspect is the effect of temperature on the speed of transmission of ultrasound. According to experiments, transmission speed of ultrasound in air and temperature have the following correlation, wherein the temperature unit is °C and the ultrasound speed unit is m/sec.

| Temperature | -30 | -20 | -10 | 0 | 10 | 15 | 20 | 30 |
|---|---|---|---|---|---|---|---|---|
| Ultrasound speed | 313 | 319 | 325 | 331 | 337 | 340 | 343 | 349 |

Another aspect on correction is the effect of the angle of transmission of wireless signal. FIG. 7 is an illustrative diagram showing the correction of ranging angle according to an embodiment of the present invention. In the figure, wireless transmitting device of the electronic signal light/electronic road sign is designated by reference numeral 70, wireless receiving device installed at the front of a vehicle is designated by reference numeral 71. According to the above embodiment, the relative distance is the linear distance S between 70 and 71. In practice use, a driver is only interested in the distance D between vehicle 71 and the vehicle stop line 72.

Therefore, it is necessary to use triangle side length formula (Pythagorean theorem: S² = H² + D²) to correct the linear distance S obtained from the receiving device. To achieve the correction, the wireless digital coded information received by the receiving device should include information on the height H.

In the above embodiment, the repeat transmission (retransmit) issue in wireless signal has not been mentioned. In fact, this issue is also very important. For example, in the hazardous condition mentioned hereinbefore, emergency brake can be applied by the traveling control device 28 to eliminate possible occurrence of a vehicle collision incident. However, it is a very dangerous operation itself to suddenly apply a brake on a highway because vehicles behind would face the same collision problem. If it is not handled properly, multi-vehicle collision incident may occur. To solve this problem, it is necessary to let the vehicles behind know what is happening in front and take the same measure in applying the brake in order to effectively avoid multi-vehicle collision. A repeat transmission function is therefore necessary.

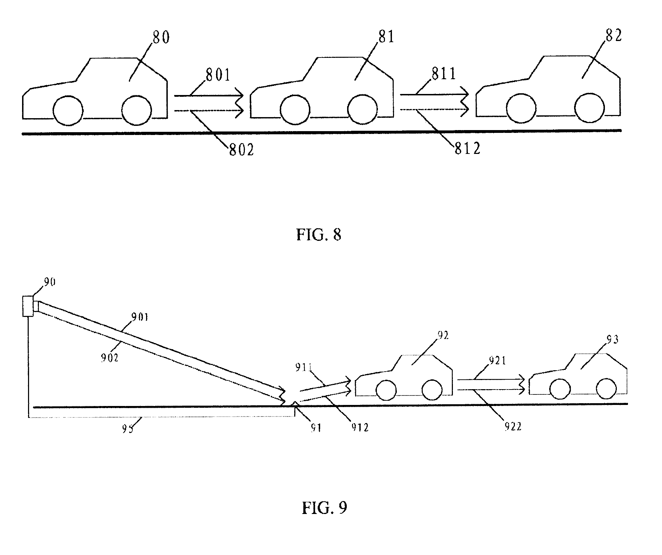

FIG. 8 is an illustrative diagram showing wireless signal repeat between traveling vehicles according to an embodiment of the present invention. The three vehicles traveling on the road are denoted by reference numerals 80, 81 and 82. Vehicle 81 1 travels behind vehicle 80, and vehicle 82 travels behind vehicle 81. When the front vehicle 80 applies the brake (or send out hazard signal), it can backwardly send out infrared coded signal 801 and ultrasound coded signal 802, which may include wireless digital information relating to the brake or hazard signal. After the vehicle behind receives this information, it can retransmit the related information backwards through signal 811 (infrared coded signal) and signal 812 (ultrasound coded signal) so that the vehicle 82 behind can also simultaneously receive the emergency brake information from vehicle 80. Similarly, vehicle 82 can send the information from vehicle 80 backwards so that more vehicles behind know the situation in front. This can effectively avoid multi-vehicle collision on highway. When vehicle 81 retransmits information received from vehicle 80, it can make some processing on the related information. For example, it can keep the emergency brake or hazard information from vehicle 80, but make some correction on the phase of the signal from vehicle 80 such that vehicle 82 can obtain information on the distance between vehicles 81 and 82 and not information on the distance between vehicles 80 and 82.

FIG. 9 is an illustrative diagram of wireless signal repeat between a traffic light and vehicles according to an embodiment of the present invention. In the figure, the traffic light is represented by reference numeral 90. The wireless coded signals (901 is infrared coded signal and 902 is ultrasound coded signal) sent out by the traffic light 90 can be received by a relay device 91 installed on the vehicle stop line, and can be retransmitted to vehicle 92 (through infrared coded signal 911 and ultrasound coded signal 912). After vehicle 92 receives the related traffic light information, it can retransmit the signals to vehicle 93 behind (through infrared coded signal 921 and ultrasound coded signal 922). The signals can be transmitted to the last vehicle behind (or set the signal transmission repeat so that retransmitting of signal can be stopped after a few times of repeat). The signal transmitted from the electronic traffic light 90 and the relay device 91 may include information on the height of installation so that the wireless receiving device can perform correction of the distance. In fact, what vehicle 92 concerned is the distance between vehicle 92 and the vehicle stop line. Therefore, the information retransmitted by the relay device 91 should use the stop line as a starting point for calculating the distance. In fact, the wireless signal sent out from the electronic traffic light 90 can be directly received by vehicle 92. Therefore, the electronic traffic light 90 should perform advanced processing of the wireless signal transmitted therefrom (mainly phase adjustment of ultrasound signal) so that the distance obtained by vehicle 92 according to the signals is relative to the stop line 92 and not the electronic traffic light 90. Similarly, the distance information of the traffic signal light transmitted from vehicle 92 to vehicle 93 is the distance from the stop line and not from vehicle 92. This allows the vehicle behind to know how far it is from the stop line.

The relay device 91 directly receives wireless signal from the wireless transmitting device on the electronic traffic light 90 through the air. Apart from air, the transmission can be carried out by a special electric cable 95 or other wireless channel ("third signal channel" in short). In this situation, the relay device 91 may adopt a metallic structure with a portion being buried below the stop line. It only requires an exposed transmitting head to perform signal transmission. One advantage of this method is that it can avoid the blockage of signal when pedestrians are crossing the road or other vehicles are traveling across the road. Also, since the relay device 91 is directly facing the vehicles on the road, the effect of its transmission and reception is most ideal. This kind of wireless transmitting device buried under the stop line can also transmit information including travel direction of special vehicle lanes, and information on destination and speed limit. The relay device 91 in the embodiment of the present invention may have the function of restoring a signal. It can restore the original infrared signal and ultrasound signal based on the signal of the third channel. Also, it can make the phase between the two signals same as or corresponds to the phase of the original signal at the relay point, or restore the coded information of infrared and ultrasound and carry out relay transmission based on a single infrared or ultrasound coded information.

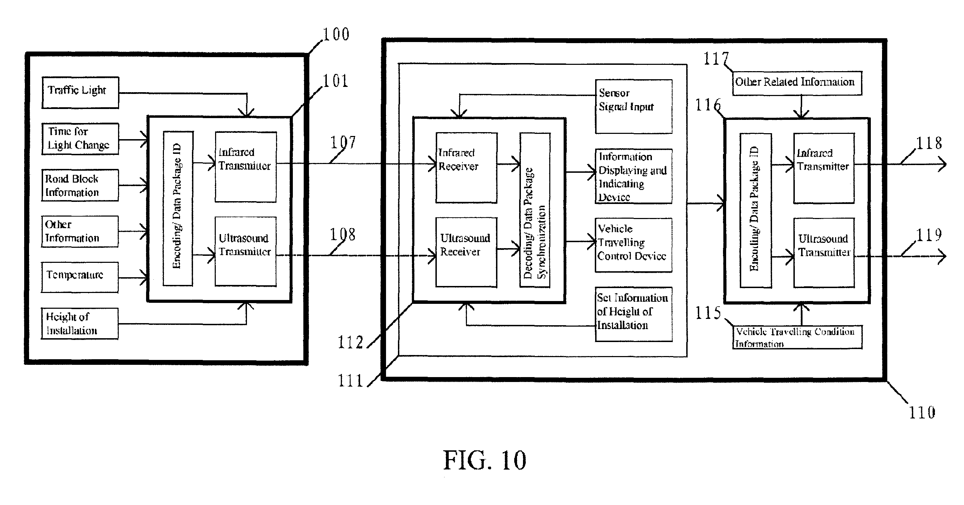

FIG. 10 is a block diagram of the entire traffic information indicating system according to an embodiment of the present invention. It is a summary of the embodiments illustrated in FIGS. 1-9. In FIG. 10, the electronic traffic light on the electronic road sign device of the present invention is denoted by reference numeral 100. The device 100 may mainly include a wireless transmitting device 101 having an infrared emitter and an ultrasound emitter as well as associated code controller and data package ID units. The wireless transmitting device 101 can be connected to the information units on the traffic light, countdown of change of traffic light, electronic road sign and other related information. The wireless transmitting device 101 can also be connected to information on its height of installation and air temperature so that after the receipt of information by the receiving device, temperature compensation and angle correction can be performed on the obtained distance parameter.

Infrared coded signal 107 and the ultrasound coded signal 108 transmitted from the wireless transmitting device 101 can be received by a wireless receiving device 112 installed on a traveling vehicle 110. The wireless receiving device 112 may include an infrared receiver and an ultrasound receiver corresponding to the wireless transmitting device 101, and associated decoding and data package synchronizing units for detecting the received data package ID, comparing the infrared coded signal and ultrasound coded signal having the same or associated ID in order to calculate the linear distance between the wireless transmitting device 101 and the wireless receiving device 112. The information received by the wireless receiving device 112 can be displayed and prompted by information displaying device and audio prompting device. In order to effectively analyze the calculated data, a safe driving system 111 in the vehicle may further include a sensor inputting device for providing data such as speed and accelerator. This can allow a traveling control device to control the accelerator and the brake system when the safe driving system 111 discovers an occurrence of a hazardous condition (e.g. speed of a vehicle is too fast, distance between vehicles is too close, vehicle in front applies brake suddenly, etc.). The safe driving system 111 may further include information on the height of installation of the wireless transmitting device 101 and other preset information so as to compensate and correct the received data. Regarding data of temperature compensation, one can adopt the temperature value measured in the present vehicle, or adopt the temperature information included in the information received from the transmitting device in front.

The traveling vehicle 110 may further includes a wireless transmitting device 116. The wireless transmitting device 116 may include an infrared emitter and an ultrasound emitter, and associated code controller and data package ID unit for transmitting infrared coded signal 118 and ultrasound coded signal 119. The wireless transmitting device 116 can be connected to a vehicle traveling condition information unit 115, other associated information unit 117 and the above-mentioned safe driving system 111. Based on the information of the safe driving system 111, the vehicle traveling condition information unit 115 and the associated information unit 117, the wireless transmitting device 116 can determine whether to transmit infrared coded signal 118 and ultrasound coded signal 119, and can determine the coded information included in the information to be transmitted. The information may include traveling condition of the present vehicle such as emergency brake, hazard signal and turning signal. Furthermore, it may include information such as speed and acceleration of the vehicle so that the vehicle behind can be prompted to carry out related safe driving operation based on the received information. Besides, the wireless transmitting device 116 can also be used as a relay device for retransmitting digital coded information transmitted from the electronic traffic light or the electronic road sign device 100, and received by the safe driving system 111. Depending on the actual situation and requirement, the retransmitted signal can have its code and phase kept as those that are received, or they can be changed or added to the information and phase of the present vehicle.

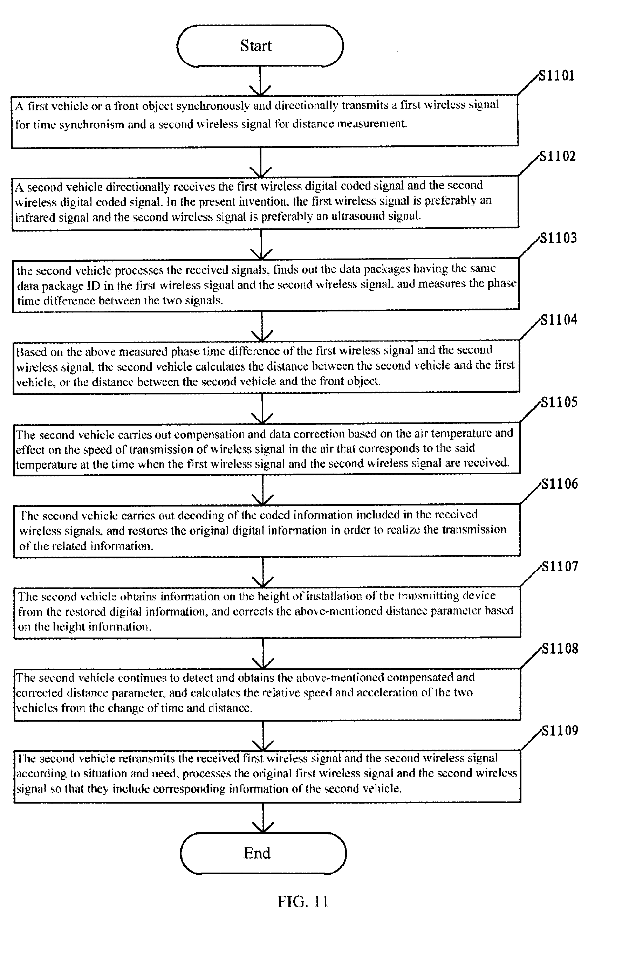

FIG. 11 is a flowchart of the traffic information indicating method according to an embodiment of the present invention.

In step S1101, a first vehicle or a front object synchronously and directionally transmits a first wireless signal for time synchronism and a second wireless signal for distance measurement. The first wireless signal and the second wireless signal are digital coded.

In step S 1102, a second vehicle directionally receives the first wireless digital coded signal and the second wireless digital coded signal. In the present invention, the first wireless signal is preferably an infrared signal and the second wireless signal is preferably an ultrasound signal.

In step S 1103, the second vehicle processes the received signals, finds out the data packages having the same data package ID in the first wireless signal and the second wireless signal, and measures the phase time difference between the two signals.

In step S 1104, based on the above measured phase time difference of the first wireless signal and the second wireless signal, the second vehicle calculates the distance between the second vehicle and the first vehicle, or the distance between the second vehicle and the front object.

In step S1105, the second vehicle carries out compensation and data correction based on the air temperature and effect on the speed of transmission of wireless signal in the air that corresponds to the said temperature at the time when the first wireless signal and the second wireless signal are received.

In step S 1106, the second vehicle carries out decoding of the coded information included in the received wireless signals, and restores the original digital information in order to realize the transmission of the related information.

In step S 1107, the second vehicle obtains information on the height of installation of the transmitting device from the restored digital information, and corrects the above-mentioned distance parameter based on the height information.

In step S 1108, the second vehicle continues to detect and obtains the above-mentioned compensated and corrected distance parameter, and calculates the relative speed and acceleration of the two vehicles from the change of time and distance.

In step S1109, the second vehicle retransmits the received first wireless signal and the second wireless signal according to situation and need, processes the original first wireless signal and the second wireless signal so that they include corresponding information of the second vehicle.

In all of the above-mentioned embodiments, it has been described that basically the infrared signal and the ultrasound signal are simultaneously transmitted and received. In the actual system, if it is not necessary to measure the distance, then it only requires the transmission of one kind of wireless coded signal. Therefore transmission of a single wireless signal can be seen as a special embodiment of the system. For example, infrared or ultrasound digital coded signal can be adopted to directionally transmit traffic signal light and traffic road sign information in order to realize all-weather traffic information indication. It can also be used to transmit to the vehicle behind information on the vehicle's travel condition, such as emergency brake, hazard, turning, speed and acceleration, etc. so that the vehicle behind can obtain related prompting in order to avoid collision and realize driving safety. For adopting ultrasound signal having a fixed frequency, the vehicle receiving the signal can calculate the relative speed between the emitter and the receiver based on the change of its frequency using Doppler effect. The idea and principle of the present invention are applicable whether one kind or two kinds of signal transmission are adopted.

Regarding the issue of transmitting distance of infrared and ultrasound of the present invention, it relates to factors such as the angle of transmission of signal from the emitter, the power of transmission of signal, etc. It also relates to signal frequency/wavelength and signal coding format. Generally speaking, the infrared carrier wave signal having 8-14 mm wavelength can achieve signal transmission of over 1000 m in absence of a relay device. In the system of the present invention, the adoption of a 200 m transmission distance is already sufficient. For ultrasound signal, its transmission distance is usually shorter than that of infrared signal. Nowadays, the distance range of the most commonly used 40 kHz frequency rangefinder is usually around 15 m. According to the characteristics of absorption rate and attenuation which is proportional to the square of frequency, the absorption rate of ultrasound having frequency of 40 kHz is about 4 dB/m. The absorption rate of ultrasound having frequency of 20 kHz is only about 1 dB/m. Hence, in 20 kHz the distance range of ultrasound can be increased to about 60 m.

Since the present invention adopts a direct signal receiving method that is different from an echo receiving method of a rangefinder, its distance range is more than 2 times longer than that of a rangefinder, i.e. a linear distance of about 120 m. This is sufficient for the system of the present invention. In fact, it is possible even the distance is shorter. In practical use, one can adopt an infrared signal having a more powerful transmission capacity to carry out the traffic information transmission and warning in hazardous condition. When the distance enters within the range of ultrasound measuring distance, the ultrasound part can start to operate, and start the safe travel control device in emergency situation so as to realize effective anti-crash and safe driving.

The Doppler effect, the characteristics and transmitting/receiving of ultrasound and infrared above-mentioned are known technologies in the relevant fields and are not described in detail in the present application. Also, the present invention has been described with references to a preferred embodiment thereof, and it should be noted that various other changes or modifications may be made without departing from the scope of the present invention.

## Claims

1. A wireless traffic information indicating method comprising the following steps:
a first vehicle or a front object synchronously and directionally transmitting a first wireless signal for time synchronization and a second wireless signal for distance measurement; and
a second vehicle directionally receiving the first wireless signal and the second wireless signal, and calculating the distance between the second vehicle and the first vehicle or the front object based on the first wireless signal and the second wireless signal.

2. The method as claimed in claim 1, wherein the first wireless signal is an infrared signal and the second wireless signal is an ultrasound signal.

3. The method as claimed in claim 2, wherein the second vehicle calculates the distance between the second vehicle and the first vehicle or the front object based on the first wireless signal and the second wireless signal, and
the second vehicle calculates the relative distance between the second vehicle and the first vehicle or the front object based on phase time difference of the received infrared signal and ultrasound signal, the front object being an electronic traffic signal or an electronic traffic road sign device.

4. The method as claimed in claim 3, wherein the second vehicle continuously measures the relative distance between the second vehicle and the first vehicle or the front object, and calculates the relative speed between the second vehicle and the first vehicle or the front object based on the measured data.

5. The method as claimed in claim 1, wherein the first wireless signal or the second wireless signal transmitted from the first vehicle or the front object comprises digital coded information; and the second vehicle interprets the digital coded information in the received first wireless signal or second wireless signal so as to achieve the transmission of digital information.

6. The method as claimed in claim 5, wherein the first wireless signal and the second wireless signal comprise data package ID information, and the second vehicle synchronizes the received first wireless signal and second wireless signal based on the data package ID.

7. The method as claimed in claim 6, wherein the digital coded information further comprises information on height, and the second vehicle carries out angle correction to the calculation of relative distance and relative speed based on the information on height.

8. The method as claimed in claim 1, wherein the first vehicle backwardly and directionally transmits the first wireless signal and the second wireless signal, the second vehicle forwardly and directionally receives the first wireless signal and the second wireless signal, and the second vehicle backwardly and directionally transmits the received first wireless signal and second wireless signal so that the first wireless signal and the second wireless signal transmitted by the first vehicle are backwardly retransmitted.

9. A wireless traffic information indicating system **characterized in** comprising:
a wireless transmitting device installed in a traffic signal light or a traffic road sign or a vehicle traveling in front for directionally transmitting digital coded first wireless signal and second wireless signal having different speeds of transmission; and
a wireless receiving device installed in a traveling vehicle for directionally receiving the first wireless signal and the second wireless signal, interpreting coded information in the received first wireless signal and second wireless signal, and calculating the distance between the traveling vehicle and the traffic light or the traffic road sign or the vehicle traveling in front based on phase time difference of the received first wireless signal and second wireless signal.

10. The system as claimed in claim 9, wherein:
the wireless transmitting device comprises:
an infrared transmitting device for directionally transmitting the first wireless signal which is a coded infrared signal;
an ultrasound transmitting device for directionally transmitting the second wireless signal which is a coded ultrasound signal having a known frequency;
the wireless receiving device comprises:
an infrared receiving device for directionally receiving the infrared signal transmitted from the infrared transmitting device and interpreting the coded information in the infrared signal;
an ultrasound receiving device for directionally receiving the ultrasound signal transmitted from the ultrasound transmitting device, interpreting the coded information in the ultrasound signal, and calculating the relative speed between the traveling vehicle and the traffic light, or the traffic road sign, or the vehicle traveling in front based on Doppler effect.

11. The system as claimed in claim 10, wherein the wireless receiving device further comprises an information display device for displaying corresponding traffic information to a driver through a screen.

12. The system as claimed in claim 10, wherein the wireless receiving device further comprises an audio prompting device for prompting corresponding traffic information to a driver through sound.

13. The system as claimed in claim 11 or 12, wherein the wireless receiving device further comprises an automatic traveling control device so that when the system discovers a potential hazard or a stop traveling information based on the received first wireless signal or the second wireless signal, traveling condition of vehicle can be controlled through the automatic traveling control device in order to reduce or eliminate the hazard, or stop the vehicle in front of a stop sign.

14. The system as claimed in claim 13, wherein traffic facility in the direction of the transmission of the first wireless signal and the second wireless signal further comprises a relay device,
the relay device receives and retransmits the first wireless signal and the second wireless signal through space, and keeps the code of the original first wireless signal or second wireless signal unchanged; or
the relay device receives and retransmits in space the first wireless signal or the second wireless signal through an independent third signal channel, and keeps the code of the original first wireless signal or second wireless signal unchanged; or
the relay device simultaneously receives and retransmits the first wireless signal and the second wireless signal so that the code and phase of the first wireless signal and the second wireless signal are the same as the code and phase of the original first wireless signal and second wireless signal at the relay point; or
the relay device receives the first wireless signal or the second wireless signal, restores the original first wireless signal and second wireless signal based on the received first wireless signal or second wireless signal so that the code and phase of the first wireless signal, the second wireless signal are the same as the code and phase of the original first wireless signal, the original second wireless signal at the relay point, and then transmits the restored first wireless signal, the restored second wireless signal; or
an independent third signal channel is provided between the relay device and the transmitting device of the first wireless signal and the second wireless signal, the relay device restores the first wireless signal and the second wireless signal based on the third signal received so that the code and phase of the first wireless signal, the second wireless signal are the same as the code and phase of the original first wireless signal, the original second wireless signal, and then transmits the restored first wireless signal, the restored second wireless signal.

15. The system as claimed in claim 13, wherein the traveling vehicle further comprises a relay unit,
the relay unit receives the first wireless signal or the second wireless signal through a receiving device at the front of the vehicle, and processes the signal according to the actual condition such that it includes traffic indicating information in front as well as coded information corresponding to the current vehicle condition, and then backwardly and directionally transmits the processed signal through a transmitting device; or
the relay unit simultaneously received the first wireless signal and the second wireless signal through a receiving device at the front of the vehicle, processes the signals according to the actual condition so that they include traffic indicating information in front as well as coded information corresponding to the current vehicle condition, and then backwardly and directionally transmits the processed signals through a transmitting device; or
the relay unit receives the first wireless signal or the second wireless signal through a receiving device at the front of the vehicle, restores the first wireless signal and the second wireless signal based on the received first wireless signal or second wireless signal, processes the signals according to the actual condition so that they include traffic indicating information in front as well as coded information corresponding to the current vehicle condition, and then backwardly and directionally transmits the processed signals through a transmitting device.

16. The system as claimed in claim 13, wherein the digital codes in the first wireless signal and the second wireless signal comprise data package ID and information on height of installation of the wireless transmitting device so that the wireless receiving device can achieve synchronization of data reception and make angle correction to the measured distance data.

17. The system as claimed in claim 16, wherein the digital coded information is corresponding information on travel light signal of the vehicle, which includes brake light information, hazard signal light information, left turn light information, or right turn light information.
